Europäisches Patentamt

European Patent Office

Office européen des brevets

(11) Veröffentlichungsnummer: **0 043 584**
**B1**

# EUROPÄISCHE PATENTSCHRIFT

(45) Veröffentlichungstag der Patentschrift:
04.01.84

(21) Anmeldenummer: 81105260.4

(22) Anmeldetag: 07.07.81

(51) Int. Cl.³: **B 23 Q 1/00, B 23 Q 39/04**

(54) **Bearbeitungsautomat.**

(30) Priorität: 07.07.80 DE 3025638

(43) Veröffentlichungstag der Anmeldung:
13.01.82 Patentblatt 82/2

(45) Bekanntmachung des Hinweises auf die Patenterteilung:
04.01.84 Patentblatt 84/1

(84) Benannte Vertragsstaaten:
AT BE CH FR GB IT LI LU NL SE

(56) Entgegenhaltungen:
CH - A - 458 018
DE - A - 1 477 393
DE - A - 2 012 461
DE - B - 2 727 434
FR - A - 1 315 373
GB - A - 1 174 222
GB - A - 1 331 546
US - A - 3 170 375
US - A - 3 757 963

(73) Patentinhaber: **Firma Gottlieb Gühring,
Jakobstrasse 10-13, D-7470 Ebingen (DE)**

(72) Erfinder: **Diener, Herbert, Am Jausenteich 11,
D-7470 Albstadt 1 (DE)**

(74) Vertreter: **Tiedtke, Harro, Dipl.-Ing. et al,
Patentanwaltsbüro Tiedtke-Bühling-Kinne-
Grupe-Pellmann-Grams Bavariaring 4,
D-8000 München 2 (DE)**

ACTORUM AG

Bearbeitungsautomat

Die Erfindung bezieht sich auf einen Bearbeitungsautomaten zur Bearbeitung von Werkstükken gemäss Oberbegriff des Patentanspruchs 1.

Bei einem aus der VDI-Zeitschrift, Bd. 87, Nr. 31/32, S. 489 ff. bekannten Bearbeitungsautomaten dieser Art sind auf einem waagrechten Schalttisch in radialer Ausrichtung sieben Spindeln als Werkzeugaufnahmen angeordnet, die jeweils mit einem Motor angetrieben werden. Diese Motoren erhalten Strom über Schleifringe, die an der Drehachse des Schalttisches angeordnet sind. Diese Ausgestaltung hat jedoch den Nachteil, dass an den Schleifringen Kontaktstörungen durch Funkenabbrand, Schmutzteilchen od. dgl. entstehen können. Dieser Nachteil ist besonders dann schwerwiegend, wenn als Motoren Schrittmotoren zur gezielten schrittweisen Drehung oder Verstellung der Spindeln verwendet werden, da in diesem Fall schon der Ausfall eines einzigen Stromimpulses zu Fehlern führt. Die Gefahr eines derartigen Funkenabbrandes oder eines ähnlichen, zur Kontaktunterbrechung führenden Fehlers ist insbesondere dadurch gegeben, dass bei jeder Arbeitsstellung des Schalttisches der Strom an der gleichen Stelle der Schleifringe abgenommen wird.

Aus der DE-OS Nr. 2848668 ist ein Bearbeitungsautomat bekannt, bei dem in einem Schalttisch als Werkzeugaufnahmen angeordnete Spindeln durch Zahnradübertragung über ein um die Achse des Schalttisches verdrehbares Getriebe mit ortsfest in dem Sockel des Automaten angeordneten Motoren verbunden sind. Bei diesem bekannten Automaten entfällt zwar die vorstehend angeführte Gefahr eine Kontaktstörung an Schleifringen, jedoch ist ein hoher mechanischer Aufwand notwendig. Eine präzise Spindeldrehung oder -verstellung erfordert eine dementsprechend präzise Ausführung des Getriebes. Für unterschiedliche Anwendungsarten der Spindeln müssen dabei je nach den zu übertragenden Drehzahlen und Leistungen verschieden ausgelegte Getriebe verwendet werden. Eine eventuell zusätzlich zu einer Drehverstellung der Spindeln erwünschte Axialverstellung führt zu einem noch höheren Aufwand, wobei Schwierigkeiten hinsichtlich der räumlichen Unterbringung entstehen.

Der Erfindung liegt die Aufgabe zugrunde, einen Bearbeitungsautomaten gemäss dem Oberbegriff des Patentanspruchs 1 derart auszugestalten, dass mit ihm bei einfachem Aufbau ein zuverlässiges und genaues Bearbeiten ermöglicht ist.

Die Aufgabe wird erfindungsgemäss mit den im kennzeichnenden Teil des Patentanspruchs 1 angeführten Massnahmen gelöst.

Bei dem erfindungsgemässen Bearbeitungsautomaten sind somit die Aufnahmen oder die Stationen, die auf dem Schalttisch angebracht sind, fest über die um die Achse des Schalttisches verbindbaren Leitungen angeschlossen. Dies wird dadurch ermöglicht, dass der Schalttisch aus einer Ausgangsstellung heraus aufeinanderfolgend in einer Richtung in jeweiligen Drehschritten von 360/n°, die der Stationen- und Aufnahmenteilung entsprechen, (n−1)mal zu einer Endstellung fortgeschaltet wird, aus der er in der Gegenrichtung in einem Schritt zu der Ausgangsstellung zurückgedreht wird. Daher führen die Aufnahmen oder Stationen auf dem Schalttisch jeweils weniger als einen vollen Umlauf aus, so dass die zugehörigen Leitungen fest mit zugeordneten Speisequellen verbunden werden können. Die Leitungen können Stromleitungen, hydraulische Leitungen oder pneumatische Leitungen sein. In jedem Fall ist durch den festen Anschluss eine zuverlässige genaue Dreh- oder Stellbewegung an der Aufnahme oder der Station gewährleistet. Der feste Anschluss kann äusserst einfach gestaltet werden und erlaubt eine den jeweiligen Anforderungen entsprechende Ausbildung oder Umrüstung der Aufnahmen oder Stationen ohne besondere zusätzliche Massnahmen. Die Verwindung der Leitungen um weniger als eine volle Umdrehung ergibt bei geeignet gewählter Verwindungslänge eine nur äusserst geringe mechanische Beanspruchung der Leitungen, was zu einem geringen Aufwand und hoher Betriebszuverlässigkeit führt.

Vorteilhafterweise werden diese Leitungen als Stromkabel ausgebildet, die in einer zur Schalttischachse koaxialen Leitungsführung geführt sind. Weiterhin ist es vorteilhaft, einen Teil der Leitungen als Rückmeldeleitungen auszubilden, mit denen von Dreh- oder Stellungsmeldern an den Aufnahmen oder Stationen elektrische, hydraulische oder pneumatische Signale übertragen werden, mit welchen der jeweils bestehende Betriebszustand erfassbar ist, ohne dass eine Unterbrechung der Verbindung und eine sich daraus ergebende Ungenauigkeit zu befürchten ist. Eine Anordnung der Leitungen in Schraubenform um die Schalttischachse herum ergibt den Vorteil, dass die Leitungen mechanisch im wesentlichen nur in ihrer Längsrichtung belastet werden, wodurch der Aufwand herabgesetzt und die Betriebssicherheit gesteigert wird.

Eine Ausgestaltung besteht darin, dass der Schalttisch als Revolver-Schalttisch ausgebildet ist, bei dem die Arbeitsachsen der Aufnahmen oder Stationen zur Schalttischachse parallel liegen. Diese Ausgestaltung ist besonders dann günstig, wenn die Aufnahmen oder Stationen bei dem Bearbeitungsvorgang alle eine Axialbewegung auszuführen haben, die in diesem Fall durch Bewegen des Schalttisches herbeigeführt wird.

Die Erfindung wird nachstehend anhand eines Ausführungsbeispiels unter Bezugnahme auf die Zeichnung näher erläutert.

Fig. 1 ist eine schematische Draufsicht auf ein Ausführungsbeispiel des Bearbeitungsautomaten.

Fig. 2 und 3 zeigen schematisch Anordnungen von Werkstückaufnahmen und Bearbeitungsstationen des Bearbeitungsautomaten.

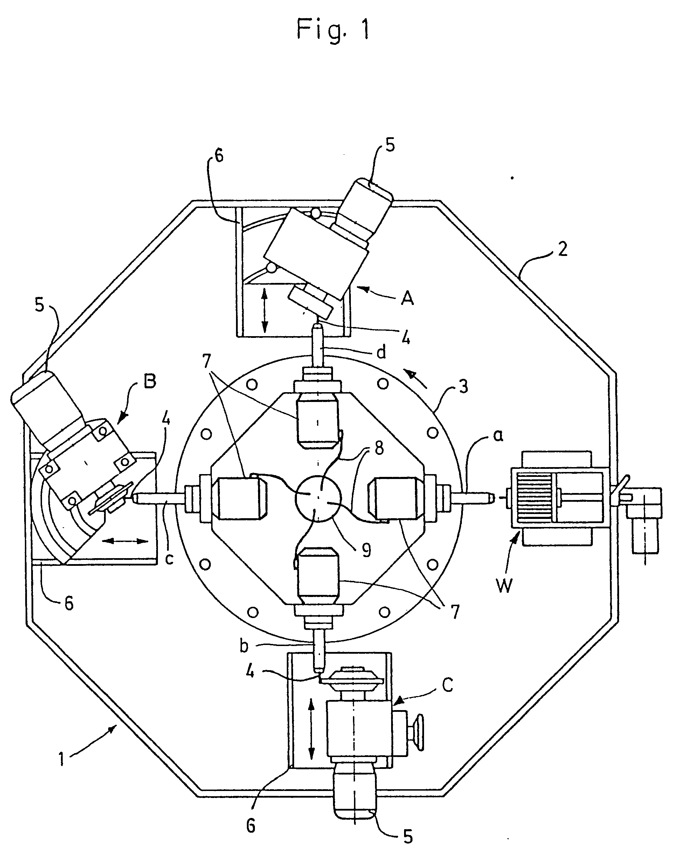

In der Fig. 1 ist als Ausführungsbeispiel ein Bearbeitungsautomat 1 zur Herstellung von Bohrern, Fräsern, Reibahlen od. dgl. gezeigt. Bei diesem Automaten sind auf einem ringförmigen Sockeltisch 2 unter gleichen radialen Abständen von 90° eine Wechselstation W und Bearbeitungsstationen A, B und C angeordnet. Konzentrisch zu dem Sockeltisch 3 ist ein Schalttisch 2 drehbar, der als Werkstückaufnahmen Spindeln a, b, c und d trägt, in die Werkstücke 4 aufgenommen werden. Die Bearbeitungsstationen A, B und C enthalten die jeweiligen Werkzeuge wie Schleifscheiben od. dgl., die über Werkzeugantriebmotoren 5 angetrieben werden und mit Hilfe von Zustelleinrichtungen 6 in die gewünschten Arbeitsstellungen verstellbar sind. Bei dem Ausführungsbeispiel ist A eine Spitzenschleifstation, B eine Nutenschleifstation und C eine Hinterschleifstation. Die Wechselstation W hat eine Vorrichtung zum Entnehmen eines fertig bearbeiteten Werkstücks 4 aus der jeweiligen Spindel und Einführen eines Rohwerkstücks in diese Spindel sowie ferner ein Magazin für Rohwerkstücke und eine Aufnahme für die bearbeiteten Werkstücke.

Die Spindeln a bis d sind jeweils mit einem Motor 7 dreh- und/oder verstellbar. Zur genauen Verstellung werden als Motore 7 Schrittmotore oder Gleichstrommotore mit Rückmeldung verwendet, die eine genaue Lageeinstellung erlauben. Jeder Motor 7 ist über eine Versorgungsleitung 8 an eine nicht gezeigte Speisequelle angeschlossen, die die Antriebsenergie, bzw. Stellsignale od. dgl. liefert. Die Versorgungsleitungen 8 sind nahe der Achse des Schalttisches 3 in einem Leitungsführungsrohr 9 aufgenommen, das zu dem Schalttisch 3 konzentrisch ist und zusammen mit diesem drehbar oder feststehend sein kann. Im letzterem Fall ist dafür Sorge zu tragen, dass zwischen dem Oberrand des Rohrs 9 und den Versorgungsleitungen 8 keine schädliche Reibung auftritt. Die Versorgungsleitungen 8 werden in dem Rohr 9 lose bis in die Nähe des Bodens des Sockeltisches 2 geführt und von dort zu den nicht gezeigten Speisequellen geleitet. Besonders vorteilhaft ist es, die Versorgungsleitungen 8 in dem Rohr 9 schraubenförmig aufzuwickeln, da an ihnen dann bei der Bewegung des Schalttisches 3 nur eine geringe Zug- oder Druckbelastung in ihrer Längsrichtung entsteht.

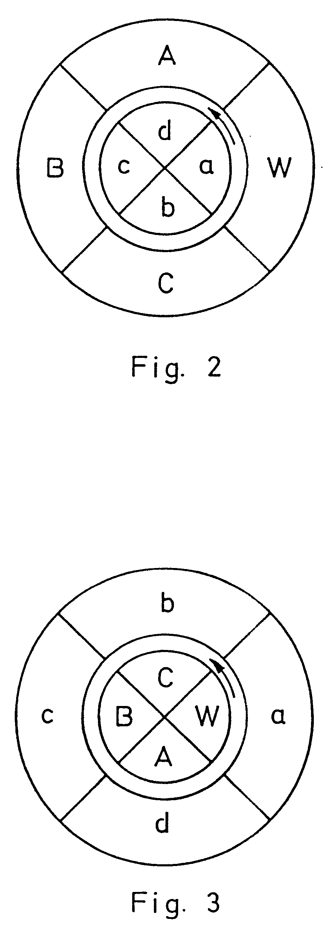

Bei dem Bearbeitungsautomaten 1 nach Fig. 1 sind die Wechselstation W, die Bearbeitungsstationen A, B und C sowie die als Werkstückaufnahmen dienenden Spindeln a bis d in der Weise angeordnet, wie es in der Fig. 2 schematisch verdeutlicht ist. Der Arbeitsablauf bei dem Automaten ist folgender: In der in den Fig. 1 und 2 gezeigten Stellung des Schalttisches 3 erfolgt an der Wechselstation W der Austausch des Werkstückes an der Spindel a, während an den Bearbeitungsstationen A, B und C jeweils die Werkstücke in den Spindeln d, c und b bearbeitet werden. Nach Abschluss des Arbeitsgangs wird der Schalttisch 3 in Pfeilrichtung, d.h. von oben gesehen entgegen dem Uhrzeigersinn um 90° verschwenkt. Dadurch kann an der Wechselstation W das Werkstück der Spindel b ausgewechselt werden, während an den Bearbeitungsstationen die Werkstücke in den Spindeln a, d und c bearbeitet werden. Nach diesem Arbeitsgang, einem weiteren Vorschalten des Schalttisches 3 um 90°, einem nächsten Arbeitsgang, einem dritten Vorschalten um 90° und einem dritten Arbeitsgang wird der Schalttisch 3 in Gegenrichtung, d.h. im Uhrzeigersinn um 270° verschwenkt, so dass die in den Fig. 1 und 2 gezeigte ursprüngliche Ausgangslage wiederhergestellt ist. Diese einzelnen Vorgänge sind in der Tabelle 1 am Ende der Beschreibung verdeutlicht, in welcher aufeinanderfolgend eingeführte Werkstücke mit 1 bis 8 nummeriert sind und ihr jeweiliger Bearbeitungszustand entsprechend den durchlaufenen Bearbeitungsstationen durch nachgesetzte Buchstaben A, AB bzw. ABC bezeichnet ist. Die jeweilige Gegenüberstellung zwischen den Stationen und den Aufnahmen bzw. Spindeln ist durch die Zusammenstellung der zugehörigen Bezugszeichen dargestellt.

Dieses Funktionsprinzip ist natürlich auch umkehrbar, was in der Fig. 3 durch die schematische Darstellung einer Ausgangsstellung und in der Tabelle 2 am Ende der Beschreibung durch die dabei auftretenden Zuordnungen zwischen den Aufnahmen und den Stationen veranschaulicht ist. Auch hierbei sind Werkstücke mit 1 bis 8 nummeriert, wobei ihr jeweiliger Bearbeitungszustand mit den nachgesetzten Bezugszeichen der durchlaufenen Bearbeitungsstationen angeführt ist. Hierbei werden die Stationen auf dem Schalttisch angeordnet und mit dem Schalttisch zunächst in drei Schritten zu 90° in Vorwärtsrichtung, nämlich entgegen dem Uhrzeigersinn und dann in einem Schritt von 270° in Gegenrichtung verschwenkt. Die Arbeitsgeschwindigkeit bei diesem Bearbeitungsautomaten ist nahezu die gleiche wie bei einem herkömmlichen Automaten, bei dem der Schalttisch ständig in einer Richtung fortgeschaltet wird. Der einzige Unterschied besteht darin, dass der Rücklaufvorgang, nämlich die Schwenkung um $360 (n-1) / n°$ also beim Ausführungsbeispiel 270° in Gegenrichtung, eine geringfügig längere Zeit beansprucht als ein bei den bekannten Automaten stattdessen ausgeführter weiterer Vorwärtsschaltvorgang um $360/n°$, d.h. entsprechend dem Ausführungsbeispiel um 90°. Diese äusserst geringe Verzögerung, die jedoch gegenüber der Zeit für die Bearbeitungsvorgänge nicht ins Gewicht fällt, wird durch die bei dem beschriebenen Bearbeitungsautomaten erzielten Vorteile hinsichtlich der Zuverlässigkeit und des einfachen Aufbaus mehr als aufgewogen.

*Tabelle 1*

| Wa | Ad | Bc | Cb |
|----|----|----|----|
| 1 | — | — | — |
| 1. Vorschalten | | | |
| Wb | Aa | Bd | Cc |
| 2 | 1A | — | — |
| 2. Vorschalten | | | |
| Wc | Ab | Ba | Cd |
| 3 | 2A | 1AB | — |

*Tabelle (Fortsetzung)*

| 3. Vorschalten | | | |
|---|---|---|---|
| Wd | Ac | Bb | Ca |
| 4 | 3A | 2AB | 1ABC |
| Rückschalten | | | |
| Wa | Ad | Bc | Cb |
| 1/5 | 4A | 3AB | 2ABC |
| 1. Vorschalten | | | |
| Wb | Aa | Bd | Cc |
| 2/6 | 5A | 4AB | 3ABC |
| 2. Vorschalten | | | |
| Wc | Ab | Ba | Cd |
| 3/7 | 6A | 5AB | 4ABC |
| 3. Vorschalten | | | |
| Wd | Ac | Bd | Ca |
| 4/8 | 7A | 6AB | 5ABC |
| Rückschalten | | | |
| Wa | Ad | Bc | Cb |
| usw. | | | |

*Tabelle 2*

| aW | bC | cB | dA |
|---|---|---|---|
| 1. | — | — | — |
| 1. Vorschalten | | | |
| aA | bW | cC | dB |
| 1A | 2 | — | — |
| 2. Vorschalten | | | |
| aB | bA | cW | dC |
| 1AB | 2A | 3 | — |
| 3. Vorschalten | | | |
| aC | bB | CA | dW |
| 1ABC | 2AB | 3A | 4 |
| Rückschalten | | | |
| aW | bC | cB | dA |
| 1/5 | 2ABC | 3AB | 4A |
| 1. Vorschalten | | | |
| aA | bW | cC | dB |
| 5A | 2/6 | 3ABC | 4AB |
| 2. Vorschalten | | | |
| aB | bA | cW | dC |
| 5AB | 6A | 3/7 | 4ABC |

*Tabelle (Fortsetzung)*

| 3. Vorschalten | | | |
|---|---|---|---|
| aC | bB | cA | dW |
| 5ABC | 6AB | 7A | 4/8 |
| Rückschalten | | | |
| aW | bC | cB | dA |
| usw. | | | |

**Patentansprüche**

1. Bearbeitungsautomat zum Bearbeiten von Werkstücken, mit jeweils einer Anzahl n drehbarer und/oder stellbarer Werkstückaufnahmen (a bis d) bzw. Bearbeitungsstationen (A bis C) einschliesslich einer Wechselstation (W), die jeweils in einem Winkelabstand von 360/n° jeweils ortsfest oder auf einem drehbaren Schalttisch (3) angebracht sind, der so fortschaltbar ist, dass jedes Werkstück alle Stationen in der gleichen Aufeinanderfolge durchläuft, dadurch gekennzeichnet, dass die auf dem Schalttisch (3) angebrachten Aufnahmen (a bis d) oder Stationen (A, B, C, W) über flexible, von unten oder oben kommende Leitungen (8) fest angeschlossen sind, die um die Achse des Schalttisches verwindbar sind, welcher derart fortschaltbar ist, dass jeder Folge von (n−1)-Drehschritten um jeweils 360/n° in einer Richtung ein Drehschritt um 360 (n−1)/n° in Gegenrichtung folgt.

2. Automat nach Anspruch 1, dadurch gekennzeichnet, dass die Leitungen (8) Stromkabel sind, die in einer zur Achse des Schalttisches (3) koaxialen Leitungsführung (9) angeordnet sind.

3. Automat nach einem der Ansprüche 1 oder 2, dadurch gekennzeichnet, dass die Leitungen (8) Rückmeldeleitungen enthalten, die Signale aus Drehmeldern und/oder Stellungsmeldern übertragen, die den jeweiligen Aufnahmen (a bis d) oder Stationen (A, B, C, W) zugeordnet sind.

4. Automat nach einem der Ansprüche 1 bis 3, dadurch gekennzeichnet, dass die Leitungen (8) schraubenförmig um die Achse des Schalttisches (3) herumgeführt sind.

**Claims**

1. An automatic machine tool (1) for machining workpieces, including a number n each of rotatable and/or adjustable workpiece receivers (a to d) and workstations (A to C), respectively, including an exchange station (W), each of which being fixed at an angular separation of 360/n° stationarily or on a rotatable index table (3) which can be indexed in such a way that each workpiece passes all stations in the same sequence, characterized in that said receivers (a to d) or stations (A, B, C, W) fixed on said index table (3) are fixedly connected *via* flexible lines (8) arriving from below or from above and capable of being wound around the axis of said index table which can be indexed in such a way that each sequence of (n−1) rotary steps by 360/n° in one direction is followed by a rotary step by 360 (n−1)/n° in the opposite direction.

2. An automatic machine tool according to claim 1, characterized in that said lines (8) are current-carrying cables disposed in a cable conduit (9) which is coaxial with respect to the axis of said index table (3).

3. An automatic machine tool according to claim 1 or 2, characterized in that said lines (8) include feedback lines transmitting signals from rotational and/or positional detectors associated with the respective receivers (a to d) or stations (A, B, C, W).

4. An automatic machine tool according to one of the claims 1 to 3, characterized in that said lines (8) are guided helically around the axis of said index table (3).

**Revendications**

1. Machine automatique (1) pour l'usinage de pièces, avec un nombre n de supports (a, b, c, d) de pièces à usiner, ces supports étant mobiles en rotation et/ou en translation et avec un même nombre de postes d'usinage (A, B, C) y compris un poste (W) de chargement et déchargement de pièces, disposés sous un espacement angulaire qui est chaque fois de 360/n°, à poste fixe ou sur une table tournante (3) pouvant être commutée de telle sorte que chaque pièce puisse parcourir tous les postes d'usinage dans un même ordre séquentiel, caractérisée en ce que les supports de pièces (a, b, c, d) ou les postes d'usinage (A, B, C, W) montés sur la table tournante (3) sont reliés de manière permanente par l'intermédiaire de conduites souples (8) venant d'en dessous ou d'en dessus et pouvant s'enrouler autour de l'axe de la table tournante, laquelle est commutable de telle sorte qu'à chaque séquence de (n−1) pas de rotation représentant chacun 360/n° de rotation dans un sens succède un pas de rotation de 360 (n−1)/n° dans le sens contraire.

2. Machine automatique selon la revendication 1, caractérisée en que les conduites (8) sont des câbles élecriques disposés dans un guide tubulaire (9) coaxial à l'axe de la table tournante (3).

3. Machine automatique selon l'une des revendications 1 ou 2, caractérisée en ce que les conduites (8) contiennent des fils pour transmettre des signaux émis par des capteurs de position angulaire ou linéaire correspondant respectivement aux supports de pièces (a, b, c, d) ou aux postes d'usinage (A, B, C, W).

4. Machine automatique selon l'une des revendications 1 à 3, caractérisée en ce que les conduites (8) sont enroulées en hélice autour de l'axe de la table tournante (3).

Fig. 1

Fig. 2

Fig. 3